# NEW EUROPEAN PATENT SPECIFICATION

(11) **EP 2 372 322 B2**
(45) Date of publication and mention of the opposition decision: **09.08.2023**
(45) Mention of the grant of the patent: 17.06.2020
(21) Application number: 11160916.0
(22) Date of filing: 01.04.2011
(51) Int. Cl.: G01G 19/02, G01G 3/12

(54) **System and method for determining the axle load of a vehicle and a sensor device**
Vorrichtung und Verfahren zur Bestimmung der Achslasten von Fahrzeugen und eine Sensoreinheit
Dispositif et procédé de déterminer la charge d'essieu d'un vehicule et une unité de détecteur

(30) Priority: 01.04.2010 NL 2004500
(43) Date of publication of application: 05.10.2011
(73) Proprietor: Koninklijke BAM Groep N.V., 3981 AZ Bunnik (NL)
(72) Inventor: VAN DER HOEK, Marinus Jacobus, 3137 PA, VLAARDINGEN (NL); SLUER, Berwich William, 2613 BZ, DELFT (NL); VAN NIEKERK, Roland Willibrordus, 2411 VZ, BODEGRAVEN (NL)
(74) Representative: EP&C

(56) References cited:
- EP-A1- 0 491 655
- EP-A1- 0 654 654
- EP-A1- 0 892 259
- WO-A1-00/57148
- WO-A1-02/23504
- WO-A1-96/31756
- WO-A1-03/025524
- KR-A- 20090 128 827
- US-A- 4 990 769
- US-A1- 2006 001 863
- US-A1- 2007 031 084

## Description

The invention relates to a "weigh-in-motion" (WIM) system for the remote, dynamic measurement of the axle load and/or total weight of a vehicle travelling over a road surface. The WIM system comprises a road surface with a carriageway, a sensor device and a read-out unit. The sensor device comprises an elongated support which is disposed under the road surface transversely in relation to the carriageway.

The service life of a road surface is dependent on the load from vehicles travelling over the road surface. For example, too heavily loaded lorries can cause wear and damage to the road surface. For this reason, a maximum axle load and a maximum total usually weight apply in respect of the road surface to the vehicles travelling over it.

In order to safeguard the quality and service life of the road network, weighing points are disposed in the road surface at various locations. When a vehicle travels over the weighing point, the axle load and the total weight of that vehicle are dynamically determined. The term "dynamic" means that the axle load and/or total weight of the vehicle is determined while the vehicle is in motion. The vehicle does not have to stop for this purpose.

A WIM system is known from WO 01/27569 for the dynamic weighing of vehicles travelling over a road surface. This WIM system comprises a sensor device which is provided with an elongated, U-shaped support with a base and two vertical side walls. The support is fitted under the road surface. A plurality of electrical strain gauges or an optical sensor are/is fitted to the base. The optical sensor is formed, for example, by an optical fibre which runs in the longitudinal direction of the support over the base. The sensor device measures the load exerted on it and the weight of a vehicle can be derived therefrom.

While the vehicle is travelling over this sensor device, this WIM system can only record the presence of a vehicle and the associated axle load and/or total weight thereof. However, there is a need for a WIM system which can also accurately detect where the load of the wheels of the vehicle is exerted in the lateral direction of the carriageway. It would thus be possible, for example, to measure the location of the centre of gravity over the width of the vehicle. On the basis thereof, for example, an alarm can be emitted for incorrect loading and risk of overturning.

A weight sensor for weighing vehicles is known from WO 03/025524. This weight sensor comprises an optical fibre which is incorporated between projections of a housing. A transmitter sends an optical signal through the optical fibre to a receiver. A downward force of a vehicle wheel is transferred via the housing into the optical fibre, so that the optical characteristics thereof change. The weight of the vehicle can be derived from this. The upper surface of the housing is designed to accommodate the entire footprint of one or more vehicle wheels so that the entire downward force is exerted on the housing. The aim is to ensure that a part of the downward force cannot dissipate past the optical fibre without influencing the optical fibre. Even if a vehicle wheel travels alongside the optical fibre, the optical fibre must be influenced. With this weight sensor, it is therefore also not possible to detect where the load of the wheels of the vehicle is exerted in the lateral direction of the carriageway.

A system for monitoring traffic is known from US 2007/0031084. The system comprises a flexible plate which is provided on its underside with an optical fibre with a number of FBGs (Fibre Bragg Gratings). The FBGs are located between mountingblocks which rest on foundationbeams. The flexible plate between the foundation beams forms measuring zones. These measuring zones are separated from one another by the foundation beams, which form intermediate zones. In this system, the axial rigidity of the measuring zones is less than the axial rigidity of the intermediate zones, as a result of which this system is not suitable for accurately determining where the load of the wheels of the vehicle is exerted in the lateral direction of the carriageway. After all, in the case of infinitely rigid foundation beams, no load can be measured if the load is exerted precisely above the foundation beams. And, if the foundation beams are not infinitely rigid, the flexible plate will sag beyond the foundation beams, as a result of which the location of the load can no longer be identified.

A sensor buried underground for detecting an intruder within a secured area is known from US 4990769. If the weight of the intruder is not located directly above the sensor, the forces on the sensor become relatively small due to damping in the ground. In order to increase the lateral sensitivity, an optical fibre is disposed between an upper structure and a lower structure. Despite a relatively high sensitivity, so that the presence of a force can be detected, the accuracy of the sensor is relatively low. In practice, the optical fibre comprises a glass core surrounded by a plastic protective sleeve. The elasticity modulus of the protective sleeve influences the rigidity of the sensor, because the optical fibre has been disposed between the upper structure and the lower structure. In addition, the sensor can only detect whether a force is exerted in a specific area, and not precisely where the force is exerted within that area.

A module for measuring the deformation of a structure, such as a bridge, tunnel or building, is known from US 2006/0001863. The module comprises, for example, a T-shaped bar, which has a base flange and a vertical wall part. Two optical fibres are disposed in the longitudinal direction of the base flange, while a further optical fibre is disposed in the longitudinal direction against the vertical wall part. Slots are provided to make the module flexible. With this module, it is only possible to detect whether the optical fibres are subjected to a force, but not precisely where this force is exerted within the module.

A sensor for detecting a change in a physical quantity is known from WO 96/31756. The sensor comprises a first optical fibre, which is provided with a plurality of FBGs. A light source emits light via a second optical fibre to the first optical fibre, after which a fraction of the light is reflected by each FBG. Aportion of the reflected light is sent via a third optical fibre to a detector. A light pulse from the light source is converted in this way into a series of pulses, which are an "echo" of the FBGs. The light source sends, for example, polarized light through the first optical fibre. With a mechanical stress in the optical fibre, the polarization of the light is rotated and/or made elliptical. If the optical fibre between two FBGs is affected by an acousticdisturbance, as a result of which a mechanical stress occurs at this location, it is possible to identify the FBGs between which the disturbance has affected the optical fibre from a change in the polarisation of the light. However, the precise location of the disturbance between the two FBGs cannot be determined.

The object of the invention is to provide a system with which the location of the load of wheels of a vehicle travelling over the carriageway of a road surface can be accurately determined in the lateral direction of the carriageway and/or the axle load and/or the total weight of the vehicle on the road surface can be determined.

This object is achieved according to the invention by a system comprising a road surface with a carriageway, at least one sensor device, and a read-out unit, said sensor device comprising an elongated support which is disposed under the carriageway transversely in relation to the carriageway, and said support being provided with a plurality of measuring zones which are separated from one another in the longitudinal direction of the support by intermediate zones, and wherein the axial rigidity of the measuring zones in a direction perpendicular to the carriageway is greater than the axial rigidity of the intermediate zones in a direction perpendicular to the carriageway, wherein each measuring zone is provided with at least one sensor to measure deformation of this measuring zone in response to a force exerted substantially perpendicular to the carriageway, i.e. the force which is exerted by each wheel of the vehicle on the carriageway, and each sensor is connected to the read-out unit in such a way that each sensor can be read out separately by the read-out unit.

According to the invention, the measuring zones are located at a distance from one another in the longitudinal direction of the support. The longitudinal direction of the support corresponds to the lateral direction of the carriageway. The support is made, for example, from a metallic material, such as steel or aluminium. The support comprises a plurality of intermediate zones which are located between the measuring zones in the longitudinal direction of the support. The intermediate zones are weakened in relation to the measuring zones in such a way that the force to which each measuring zone is subjected in response to a force exerted substantially perpendicular to the carriageway is not or is hardly transferred via intermediate zones adjacent on both sides of this measuring zone to neighbouring measuring zones in the longitudinal direction of the support. The force which is exerted on each local measuring zone in response to a force exerted substantially perpendicular to the carriageway, for example the weight of a vehicle wheel, decreases discontinuously in the longitudinal direction of the support via the adjacent intermediate zones. The support is mechanically segmented in the longitudinal direction thereof.

The measuring zones are each provided with at least one sensor to measure local deformation of this measuring zone in response to the force exerted substantially perpendicular to the carriageway. Each sensor is designed as an optical sensor. The optical sensor comprises, for example, a glass core and a plastic protective sleeve. The sensor of each measuring zone comprises a Fibre Bragg Grating (FBG). In the case of a plurality of sensors per measuring zone, each sensor of each measuring zone comprises an FBG. The sensors of the measuring zones are connected to the read-out unit in such a way that each sensor can be read out separately. As a result, the force in the longitudinal direction of the support can be localized by the sensors, which corresponds to the determination of the location of the vehicle wheel in the lateral direction of the carriageway.

The WIM system according to the invention can therefore not only dynamically determine the axle load and/or the total weight of the vehicle, but this also has resolving power in the lateral direction of the carriageway. It is thus possible, for example, to measure the location of the centre of gravity over the width of the vehicle. On the basis thereof, an alarm can be emitted for incorrect loading and risk of overturning. In addition, for example, the number of wheels per axle can be determined.

In one embodiment, the sensors of the measuring zones extend in a direction substantially perpendicular to the carriageway. The optical sensor comprises, for example, a measuring region which extends substantially perpendicular in relation to the road surface. The sensor device can be disposed under the road surface in such a way that the measuring zones of the support extend substantially in a direction perpendicular to the carriageway of the road surface. The sensors measure, for example, the deformation of the measuring zones in a direction perpendicular to the road surface.

Moreover, the sensors of the measuring zones can each run substantially in the longitudinal direction of the support. In this case, the sensors of the measuring zones measure the deformation in the longitudinal direction of the support. The sensor device can be designed in such a way that sagging of the support occurs in response to a force exerted substantially perpendicular to the carriageway. This results in a strain in the sensors which provides a measure of the axle load and/or total weight of the vehicle.

It is also possible for the flexural stiffness of the measuring zones in the longitudinal direction of the support to be greater than the flexural stiffness of the intermediate zones in the longitudinal direction of the support. This reduces the transfer of forces in the longitudinal direction of the support from each measuring zone via adjacent intermediate zones to neighbouring measuring zones.

In one embodiment, the support is provided with a profile form with an upper flange and a vertical body part, wherein the upper flange is disposed substantially parallel to the carriageway and the vertical body part is disposed substantially perpendicular in relation to the carriageway, and wherein the vertical body part is provided with the measuring zones and/or the intermediate zones. The sensors are, for example, disposed on a lateral outer surface of the vertical body part, e.g. by means of glue or other adhesive means. The profile form can also be provided with a lower flange, which is disposed to the vertical body part substantially parallel to the carriageway in such a way that the profile form forms an I-bar. Moreover, the profile form can be designed as, for example, a T-profile, a Z-profile, a tubular profile with a rectangular cross-section or another profile form which can be asymmetrically loaded. The sensor of each measuring zone is preferably located at a distance from the upper flange and/or lower flange.

The upper flange runs substantially parallel to the carriageway, whereas the vertical body part of the profile form has an upper edge which is attached to the underside of the upper flange. The vertical body part runs substantially perpendicular in relation to the upper flange. The force of a vehicle wheel exerted substantially perpendicular to the road surface is transferred via the carriageway of the road surface into the upper surface of the upper flange of the support and then reaches the vertical body part. The measuring zones and the intermediate zones are, for example, integrated into the vertical body part, wherein weaknesses are disposed in the intermediate zones. The axle load and/or total weight of the vehicle can be determined with the sensors of the measuring zones.

As a result of a force exerted substantially perpendicular to the carriageway and located above the upper flange but not directly above the vertical body part, each measuring zone is compressed and each measuring zone simultaneously bends around the longitudinal direction of the support. In other words, both compression and torsion of the support can occur due to the "eccentric" force exerted substantially perpendicular to the carriageway. The compression of the support results in an average compression of the measuring zones of the vertical body part, whereas the torsion of the support causes a pressure or strain, superimposed on this average compression, in each measuring zone of the vertical body part. With a force exerted substantially perpendicular to the carriageway on a front part of the upper flange, the measuring zone of the vertical body part will be compressed differently than if the force is exerted on a rear part of the upper flange. By monitoring the deformation of the measuring zone through time, it can be ascertained whether the force moves from front to back or vice versa over the upper flange. The direction in which a vehicle approaches and travels over the sensor device can thus be determined.

To improve direction detection of the vehicle, it is possible that the measuring zones each comprise a front side and a rear side, wherein the front side and the rear side of each measuring zone are each provided with at least one sensor in each case to measure deformation of the measuring zone in response to a force exerted substantially perpendicular to the carriageway. The front side and the rear side of the measuring zones run substantially parallel to the longitudinal direction of the support. The front side and the rear side of the measuring zones form, for example, substantially parallel surfaces of one or more vertical body parts of the support. The front side and the rear side are located at a distance from one another in a direction perpendicular in relation to the longitudinal direction of the support. The deformation of the front side and the rear side of each measuring zone is detected with the sensors, so that a double read-out for each measuring zone is possible.

In one embodiment, the upper flange comprises a width F, which extends perpendicular in relation to the longitudinal direction of the support, and wherein the vertical part, at the location of the measuring zones, has a thickness d which extends perpendicular in relation to the longitudinal direction of the support, and wherein the ratio F/d is between 1-10. The upper flange is considerably wider than the thickness of the measuring zone. The support is, for example, formed by an I-profile, a T-profile or an inverted T-profile. In the case of a force exerted eccentrically in relation to the measuring zone on the upper flange, the upper flange and the vertical part are deformed in the measuring zone due to bending around the longitudinal direction of the support. This bending causes a compression on the front side of the measuring zone and a strain on the rear side of the measuring zone or vice versa, depending on the direction in which the vehicle travels over the support. This compression or strain as a result of bending is superimposed on the average compression of the measuring zones by the force exerted substantially perpendicular to the carriageway. The ratio F/d determines the response of the sensor to a force exerted substantially perpendicular to the upper flange and the sensitivity for detection of the direction of travel. The wider the flange, the greater the distance over which an approaching or receding vehicle will be detected in front of or behind the sensor. If the ratio F/d is between 1-10, a favourable sensitivity for direction detection is achieved, while the accuracy for determining the axle load and/or total weight remains relatively high. Incidentally, the ratio F/d may deviate substantially from this to provide a sensor device with a specific functionality.

In one embodiment, the measuring zones, which are separated from one another in the longitudinal direction of the support by the intermediate zones, are located at a distance from one another which is less than 100 mm. In other words, each intermediate zone between two adjacent measuring zones has a length which extends in the longitudinal direction of the support, wherein the length is, for example, less than 100 mm. This results in an outstanding resolution for the detection of the location of the vehicle wheel in the lateral direction of the carriageway. However, the distance between the measuring zones may be longer or shorter, depending on the sensitivity to be achieved for axle load and the desired resolving power along the length of the support.

It is possible that the measuring zones, which are bounded in the longitudinal direction of the support by the intermediate zones, each have a length which is less than 5 mm. The length of each measuring zone is the dimension of the measuring zone in the longitudinal direction of the support. If the length of the measuring zones is less than 5 mm, the force from a vehicle wheel exerted substantially perpendicular to the carriageway can be accurately localized.

In one embodiment, the support comprises, in its longitudinal direction, a length which is between 1-5 metres. The carriageway of a road surface for motor vehicles usually has a width of 3-5 metres, whereas a footpath, for example, has a width of 1-3 metres. The support extends substantially over the entire width of the carriageway under the carriageway.

The number of measuring zones of the support determines the resolution. For example, the support comprises 10-50, such as 20-40 measuring zones, which are evenly distributed over the length of the support, i.e. in the lateral direction of the carriageway. As each measuring zone can detect a force exerted on it substantially independently from the other measuring zones, the position of the load of a vehicle wheel in the lateral direction of the carriageway can be accurately determined.

It is possible that the intermediate zones each comprise at least one recess, wherein the recess has at least one vertical end edge which bounds one of the measuring zones in the longitudinal direction of the support. Each measuring zone is bounded in the longitudinal direction of the support by at least one vertical end edge of the recess. The recess of each intermediate zone can extend from one adjacent measuring zone to another adjacent measuring zone. However, it is also possible for a plurality of recesses to be disposed in one intermediate zone. In this case, the measuring zones are, for example, each bounded on both sides of the intermediate zone by a vertical end edge of one of the recesses. Obviously, the measuring zones can each be bounded at the end of the support by only one intermediate zone.

In one embodiment, at least one intermediate zone comprises two pivot parts which are pivotable about a pivot axis which extends substantially parallel to the carriageway and perpendicular in relation to the longitudinal direction of the support. For example, the support is designed as a tubular profile with a lower flange, two vertical parts and an upper flange. The lower flange can form a continuous base, whereas the upper flange and the vertical parts are at least partially interrupted in the intermediate zones in the longitudinal direction of the support. At the location of the interrupted upper flange and vertical parts, the continuous base forms a pivot axis which runs transversely the longitudinal direction of the support. As a result, the support is flexible in the width direction, so that the support can follow tracking in the carriageway of the road surface. At the same time, an accurate measurement of the axle load and/or total weight of a vehicle remains safeguarded, because the measuring zones are substantially mechanically isolated between the pivot axes.

It is possible for the longitudinal direction of the support to extend obliquely in relation to the width direction of the carriageway. When a vehicle passes, the speed of the vehicle can be derived from the time period between moments at which the sensors of different measuring zones detect a force exerted substantially perpendicular to the carriageway. Furthermore, the oblique positioning of the support also makes direction detection of the vehicle possible.

In one embodiment, the sensors of the measuring zone are disposed on a surface of the support, for example by means of glue or other adhesive means. The sensors of the measuring zones are not clamped or constrained between parts of the support.The support can be made from one piece. It is also possible for the axial rigidity of each measuring zone in a direction perpendicular to the carriageway to be greater than the rigidity of the sensor of this measuring zone in a direction perpendicular to the carriageway. The rigidity of the sensor does not need to be adapted to be resistant to constraint. As a result, the mechanical characteristics of the sensors have no effect on the mechanical characteristics of the sensor device as a whole. According to the invention, the deformation of the support is therefore disconnected from the mechanical characteristics of the sensor. This is favourable for the accuracy of the measurement. If, for example, the force exerted substantially perpendicular to the road surface is relatively small, the sensors can nevertheless measure this force accurately. Furthermore, the disposing of the sensors against an outer surface of the support compared with constraint of the sensors results in a longer service life of the sensors.

In one embodiment, a plurality of sensor devices is provided, which sensor devices are each designed as described above. Further advantages can be achieved by using a plurality of sensor devices according to the invention.

For example, it is possible that the supports of at least two of the sensor devices are disposed transversely in relation to the carriageway under the carriageway and at a distance from one another in the direction of travel of this carriageway. One sensor device forms, for example, a main sensor device, while a plurality of auxiliary sensor devices is provided in the direction of travel of the carriageway at a distance from the main sensor device. The sensors of the main sensor device and the auxiliary sensor devices are read out to provide measurement values. A change in the force exerted substantially perpendicular to the carriageway in the direction of travel of the carriageway can be derived from the measurement values. It is then possible to calculate the axle load and/or total weight depending on this change, i.e. the vehicle dynamics can be taken into account. As a result, the axle load and/or total weight can be determined particularly accurately.

In one embodiment, the supports of at least two of the sensor devices are disposed transversely in relation to the carriageway under the carriageway and under each other. If a plurality of sensor devices is disposed under each other under the same carriageway of the road surface, the effect of the elasticity modulus of the asphalt of this carriageway can be compensated. As a result, the determination of the axle load and/or the total weight is more accurate.

In one embodiment, the carriageway of the road surface comprises at least two lanes, wherein the supports of at least two of the sensor devices are disposed transversely in relation to the first lane under the first lane and transversely in relation to the second lane under the second lane, respectively, and wherein the support of the sensor device under the first lane and the support of the sensor device under the second lane extend substantially into each other's extension. If a vehicle changes from one lane to another at the location of the sensor devices located under the first and second lanes in each other's extension, the sensor devices simultaneously measure a force and the location at which the force is exerted on the first and secondlane. By linking the measurement values of the sensor devices, it is possible to determine the axle weight and/or the total weight of a vehicle which travels at a weighing point over two lanes of the road surface.

The traffic flows of a complex traffic interchange or even the traffic flows in different regions and/or cities can be controlled centrally with a central read-out unit. It is possible that the sensors of the sensor devices are each designed as optical sensors, wherein at least two of the sensor devices are disposed at a distance from one another of at least 100 metres or 500 metres or 1 km or 5 km or 10 km, and wherein the sensors of the sensor devices are connected by optical fibres to a central read-out unit. Long distances can be bridged through the use of optical fibres. Existing optical fibre infrastructure can be used.

The invention also relates to a sensor device comprising an elongated support which is provided with an upper end. According to the invention, the support is provided with a plurality of measuring zones which are each provided with at least one sensor for measuring deformation of this measuring zone in response to a force exerted perpendicular to the upper end, and wherein the measuring zones are separated from one another in the longitudinal direction of the support by intermediate zones, and wherein the axial rigidity of the measuring zones in a direction perpendicular to the upper end is greater than the axial rigidity of the intermediate zones in a direction perpendicular to the upper end, and wherein each sensor can be read out separately.

The sensor device can be designed as described above. In this case, the upper end of the sensor device is adapted to run parallel to the carriageway, so that the references to the carriageway in the description given above of the sensor device can be replaced by the upper end. For example, the term "perpendicular to the carriageway" can be replaced by "perpendicular to the upper end".

The invention also relates to a method, in particular for determining the location of a force exerted by a vehicle wheel and/or axle load and/or total weight of a vehicle travelling over a carriageway of a road surface, comprising:
- the exertion of a force exerted substantially perpendicular to the carriageway by at least one vehicle wheel of the vehicle travelling over the carriageway of the road surface,
- the measurement of deformation of at least one measuring zone of a plurality of measuring zones of an elongated support of at least one sensor device in response to the force exerted substantially perpendicular to the carriageway, wherein the support is disposed transversely in relation to the carriageway under the carriageway, and wherein the measuring zones are separated from one another in the longitudinal direction of the support by intermediate zones, and wherein the axial rigidity of the measuring zones in a direction perpendicular to the carriageway is greater than the axial rigidity of the intermediate zones in a direction perpendicular to the carriageway, wherein each measuring zone is provided with at least one sensor to measure deformation of this measuring zone in response to a force exerted substantially perpendicular to the carriageway, and each sensor is connected to a read-out unit in such a way that each sensor can be read out separately by the read-out unit, wherein the measurement of deformation of the at least one measuring zone in response to the force exerted substantially perpendicular to the carriageway is carried out with the at least one sensor of this measuring zone by the reading out thereof by the read-out unit.

The elongated support is designed in such a way that the deformation of each measuring zone can be measured substantially independently from the deformation of the other measuring zones, while each measuring zone is provided with at least one sensor which can be read out separately by the read-out unit. As the sensor of each measuring zone can be read out by the read-out unit independently of the sensors of the other measuring zones, it is possible to determine the location of the load of the vehicle wheel.

In this case, it is possible for the sensor device to form a main sensor device, wherein a plurality of auxiliary sensor devices are provided which each comprise an elongated support which is provided with a plurality of measuring zones which are each provided with at least one sensor to measure deformation of this measuring zone, and each sensor is connected to the read-out unit in such a way that each sensor can be read out separately by the read-out unit, and wherein the measuring zones are separated from one another in the longitudinal direction of the support by intermediate zones, and wherein the axial rigidity of the measuring zones in a direction perpendicular to the carriageway is greater than the axial rigidity of the intermediate zones in a direction perpendicular to the carriageway, and wherein the supports of the auxiliary sensor devices are disposed transversely in relation to the carriageway under the carriageway and in the longitudinal direction of the carriageway at a distance from the support of the main sensor device, and wherein the sensors of the main sensor device and the auxiliary sensor devices are read out by the read-out unit to provide measurement values, and wherein a change in the force exerted substantially perpendicular to the carriageway in the direction of travel of the carriageway is determined from the measurement values, and wherein the axle load and/or the total weight is calculated depending on this change. The support of the main sensor device and/or the support of the auxiliary sensor devices can each be designed in the same way as the sensor device described above.

The invention will now be explained in detail with reference to the attached figures.
Figure 1a shows a perspective view of an exemplary embodiment of a system for determining axle load and/or total weight of a vehicle.
Figure 1b shows the top view of the system shown in Figure 1a.
Figure 1c shows a side view of the system shown in Figure 1a.
Figures 1d and 1e show schematically the load of a vehicle axle with two wheels and a vehicle axle with 2x2 wheels.
Figure 2a shows a side view of a first embodiment of a sensor device for use in a system for determining axle load and/or total weight of a vehicle.
Figure 2b shows a top view of the sensor device shown in Figure 2a.
Figure 2c shows a view in cross-section of the sensor device shown in Figure 2a.
Figure 2d shows a view in cross-section of the sensor device shown in Figure 2a in a housing.
Figures 3a-3c show views in cross-section of the sensor device shown in Figures 2a-2d with deformation under the influence of a load.
Figure 3d shows a graphic of the deformation of the sensors according to Figures 3a-3c.
Figures 4a-4f show different views and details of a second embodiment of a sensor device for use in a system for determining axle load and/or total weight of a vehicle.
Figure 5 shows a side view of a third embodiment of a sensor device for use in a system for determining axle load and/or total weight of a vehicle.

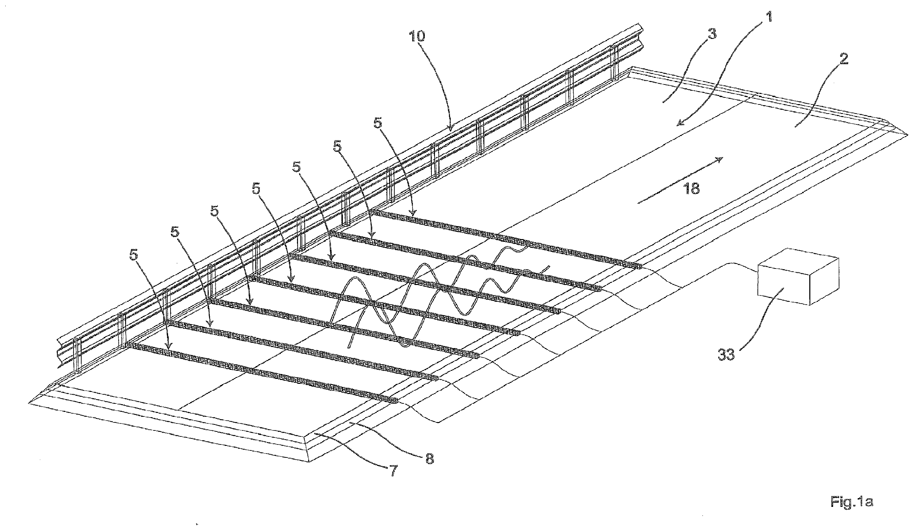

The system shown in Figures 1a-1c for determining axle load and/or total weight of a vehicle comprises a road surface 1 which, in this exemplary embodiment, is provided with a carriageway with two lanes 2, 3. The lanes 2, 3 determine a direction of travel which is indicated with an arrow 18. The direction of travel is the same for the lanes 2, 3, i.e. the road surface 1 forms a dual carriageway. The left lane 3 is bounded by a crash barrier 10. Obviously, the road surface 1 may also comprise only one single lane or more than two lanes, such as three or four lanes (not shown).

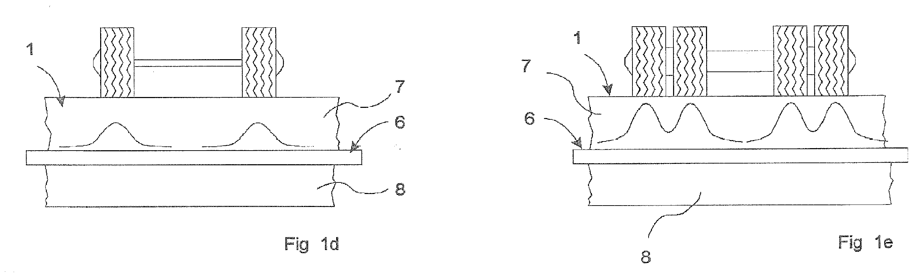

The road surface 1 is provided with a first asphalt layer 7 with an upper surface which defines the road surface, and a second asphalt layer 8 which is located under the first asphalt layer 7. In this exemplary embodiment, seven sensor devices 5 are disposed in the second asphalt layer 8. The number of sensor devices 5 may differ from this. For example, only one single sensor device 5 is disposed in the second asphalt layer 8. Furthermore, the sensor device or sensor devices 5 may also be provided in the first asphalt layer 7. The distribution of the wheel load for a vehicle axle with two wheels and with 2x2 wheels is shown schematically in Figure 1d and Figure 1e.

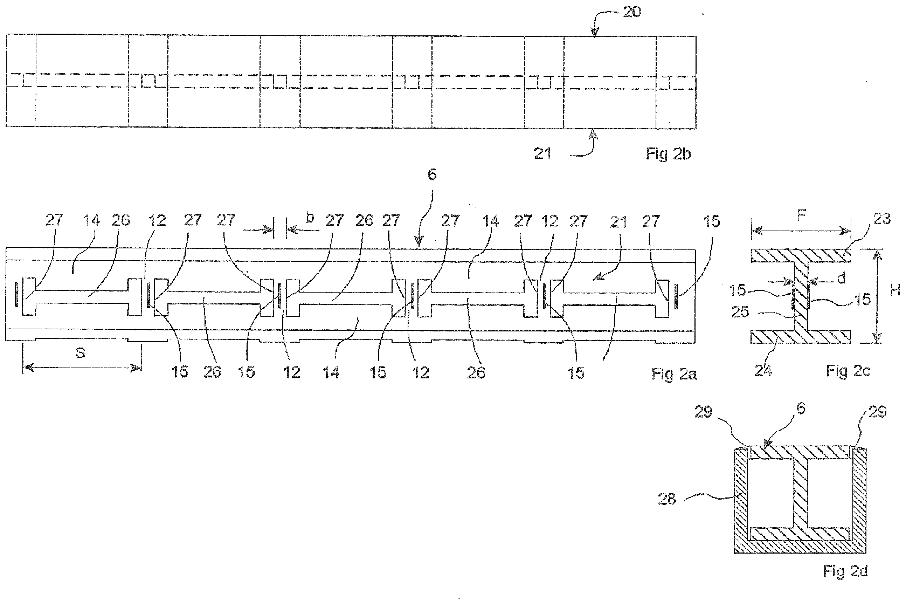

Figures 2a-2c show a first embodiment of the sensor device 5. The sensor device 5 comprises an elongated support 6 with a profile form. The support 6 comprises a front side 20 and a rear side 21. The support 6 is made, for example, from stainless steel, galvanized steel or other steel, aluminium, plastic, other materials or combinations thereof. In this exemplary embodiment, the support 6 is designed as an I-bar, which is provided with an upper flange 23, a vertical body part 25 and a lower flange 24. The sensor device 5 is disposed under the carriageway 2, 3 in such a way that the upper flange 23 and lower flange 24 extend substantially parallel to the road surface 1. If the road surface 1 runs horizontally, the vertical body part 25 is located substantially vertically under the carriageway 2, 3.

The support 6 is provided with a plurality of measuring segments or measuring zones 12, which are separated from one another in the longitudinal direction of the support 6 by intermediate segments or intermediate zones 14. The intermediate zones 14 each extend in the longitudinal direction of the support 6 in each case between two adjacent measuring zones 12, i.e. the support 6 comprises measuring zones 12 and intermediate zones 14, which alternate with one another. In this exemplary embodiment, each measuring zone 12 is provided both on the front side 20 and on the rear side 21 with a sensor 15 for measuring deformation of this measuring zone 12 in response to a force exerted substantially vertically. The sensors 15 are designed to measure substantially vertical compression in the measuring zones 12.

Each sensor 15 is designed as an optical sensor. The optical sensors 15 are designed as Fibre Bragg Gratings. The optical sensors 15 of all measuring zones 12 are disposed in a single optical fibre. This results in a minimum cabling which is run along the support. The operation of an optical sensor for measuring deformation is generally known and will not be further explained.

The intermediate zones 14 are each provided with a through recess 26, which is bounded in the longitudinal direction of the support 6 on both sides by two vertical end edges 27. A measuring zone 12 with two sensors 15 is located in each case between two end edges 27 of two different recesses 26. The measuring zones 12 are each bounded in the longitudinal direction of the support 6 on both sides of this measuring zone 12 in each case by one of the recesses 26.

As a result of the recesses 26, the axial rigidity of the intermediate zones 14 in the vertical direction is less than the axial rigidity of the measuring zones 12 in the vertical direction. In this case, the measuring zones 12 have substantially the same axial rigidity as one another, while the intermediate zones 14 also have substantially the same axial rigidity as one another. The intermediate zones 14 are weakened in relation to the measuring zones 12 in such a way that a force exerted substantially vertically onto the upper flange 23 causes a discontinuous load distribution in the longitudinal direction of the support 6. The upper flange 23 forms, as it were, a number of horizontal scale beams which are each disposed on two vertical measuring zones 12. By mechanically segmenting the support 6 in its longitudinal direction, the force in the longitudinal direction of the support 6 can be accurately localized.

The accuracy is dependent on the length b of the measuring zones 12 and the length S of the intermediate zones 14. The ratio S/b is, for example, between 10-30, such as 20. Although, in this exemplary embodiment, six measuring zones 12 are distributed over the longitudinal direction of the support 6, the number of measuring zones 12 may be higher or lower. This is dependent, for example, on the length of the support 6 and the desired accuracy for localization of the position of the vehicle wheels of a vehicle axle over the length of the support. If the support 6 has a length of 3 m, 30 measuring zones 12, for example, can be disposed in the support 6.

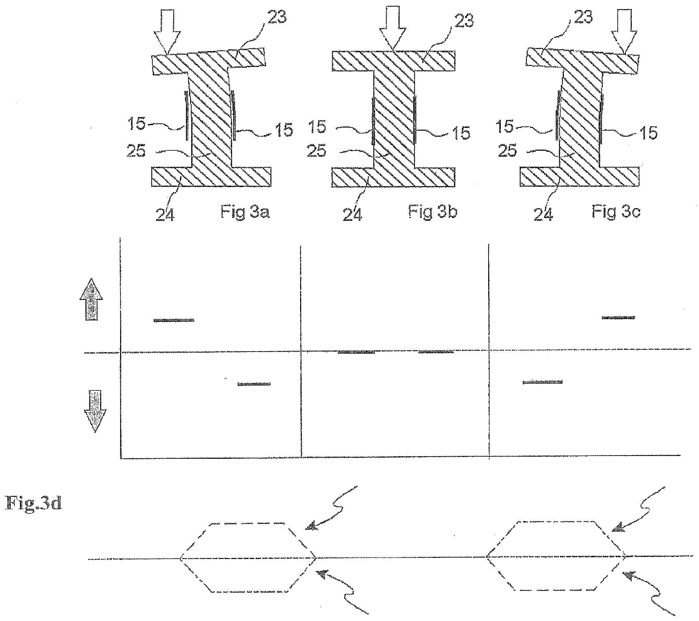

In addition, the flexural stiffness of the measuring zones 12 is greater than the flexural stiffness of the intermediate zones 14. The flexural stiffness is relevant, for example, for direction detection. Figures 3a-3c show schematically the deformation of the support 6 in the exertion of a vertical force on the upper flange 23 which is applied respectively on the front side 20, the middle and the rear side 21. The deformation which is measured by the sensors 15 on the front side 20 and the rear side 21 is an average compression as a result of the vertical force with a positive or negative deformation (strain or compression) superimposed upon it, depending on the point of application of the vertical force. From the pattern of the measurement values of the sensors 15 through time (see Figure 3d), it is possible to derive the direction in which the vehicle has travelled over the support 6.

If the sensor 15 detects, for example, a compression on the front side 20 and the sensor 15 registers a strain on the rear side 21, the support 6 has sagged forward. If the compression of the sensor 15 on the front side 20 then changes to a strain, and the strain of the sensor 15 on the rear side 21 changes to a compression, this means that the vehicle has travelled over the support 6 in the direction from the front side 20 to the rear side 21. Furthermore, it is also possible to determine the speed of the vehicle in this way.

The sensitivity of the support 6 for direction detection is dependent on different parameters, such as the width F of the upper flange 23 and the thickness d of the body 25. For example, the ratio F/d is approximately 1-10. The height H of the support 6, which is determined by the distance between the upper flange 23 and the lower flange 24, is, for example, between 20-60 mm.

To protect the operation of the sensors 15 against environmental influences, the support 6 is optionally incorporated in a trough-shaped housing 28 with a base and vertical side walls (see Figure 2d). The gaps between the upper flange 23 and the upper edges of the vertical side walls are sealed by sealing strips 29. However, the support 6 is also usable without the housing 28.

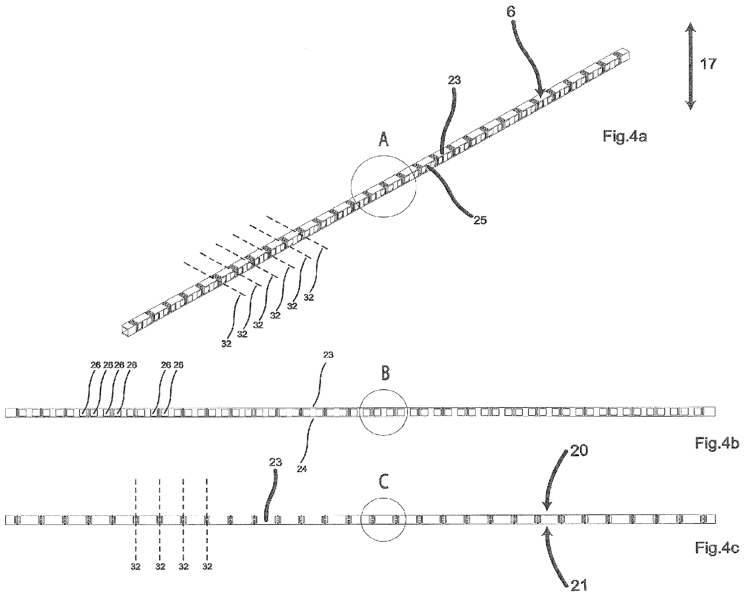

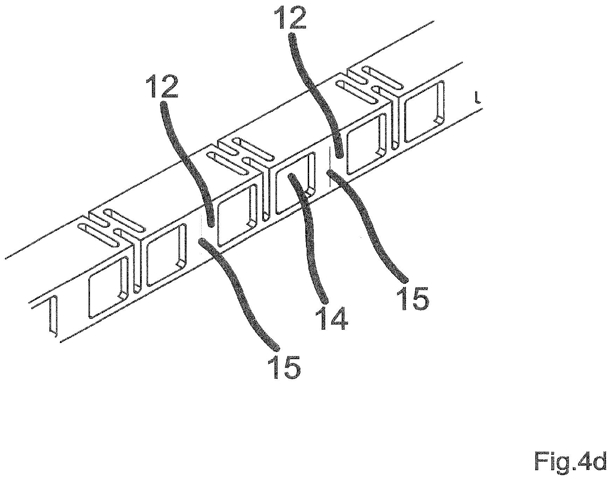

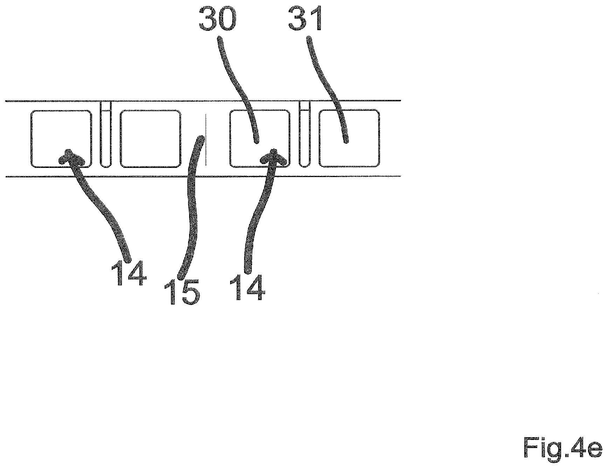

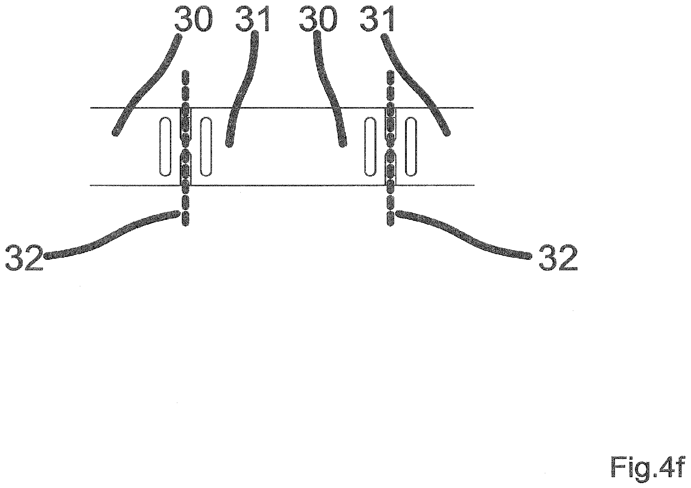

Figures 4a-4b show a second embodiment of the sensor device 5. The same or the same type of parts are indicated with the same reference numbers. The support 6 is designed as a tubular profile with an substantially rectangular cross-section. Each intermediate zone 14 comprises two pivot parts 30, 31 which are pivotable in relation to one another around a pivot axis 32. The pivot axes 32 run substantially in the direction of travel 18 parallel to the road surface 1, i.e. substantially horizontally. The pivot axes 32 are defined by transverse notches which are disposed in the support 6. As a result, the support 6 can follow tracking in the asphalt layers 7, 8 of the road surface. The operation of this sensor device 5 is the same as described above.

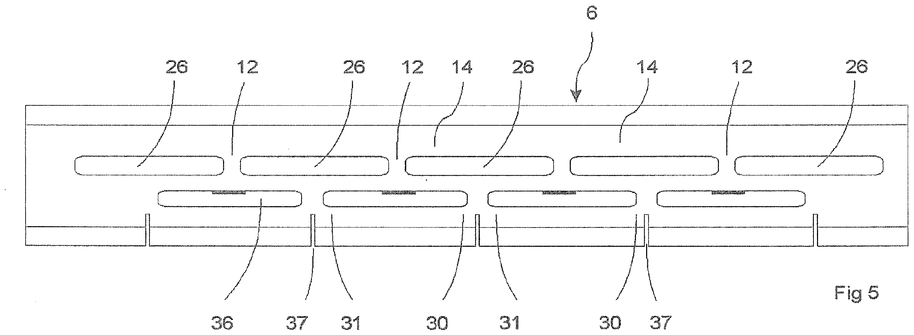

Figure 5 shows a third embodiment of the sensor device 5. The same or the same type of parts are indicated with the same reference numbers. The support 6 is designed as an I-bar. The measuring zones 12 are each provided with a sensor 15 which extends substantially in the longitudinal direction of the support 6. The support 6 comprises the recesses 26 of the intermediate zones 14. In addition, openings 36 are disposed in the support 6 which extend in the longitudinal direction of the support 6 and are located under the recesses 26. Each opening 36 comprises a part which is located in one of the measuring zones 12. The sensor 15 of the measuring zone 12 is fixed in that part. In this exemplary embodiment, each opening 36 continues on both sides of the measuring zone 12 into the adjacent intermediate zones 14.

Vertical slots 37 can be disposed between the openings 36. The slots 37 divide each intermediate zone 14 into two pivot parts 30, 31 which are pivotable in relation to one another around a pivot axis which is substantially defined by the ends of the slots 37, i.e. substantially in the direction of travel 18 parallel to the road surface 1. As a result, the support 6 can be adapted to tracking of the road surface 1. The operation of this sensor device 5 is the same as described above.

The system shown in Figures 1a-1c comprises a plurality of sensor devices 5 which are each designed, for example, as described with reference to Figures 2a-2e and/or Figures 4a-4f and/or Figure 5. The sensor devices 5 are located in the direction of travel 18 of the carriageways 2, 3 at a distance from one another. The middle sensor device 5 forms, for example, a main sensor device, while three auxiliary sensors are disposed in each case in front of and behind it. The sensors 15 of the main sensor device and of the auxiliary sensor devices are connected via optical fibres to a central read-out unit 33.

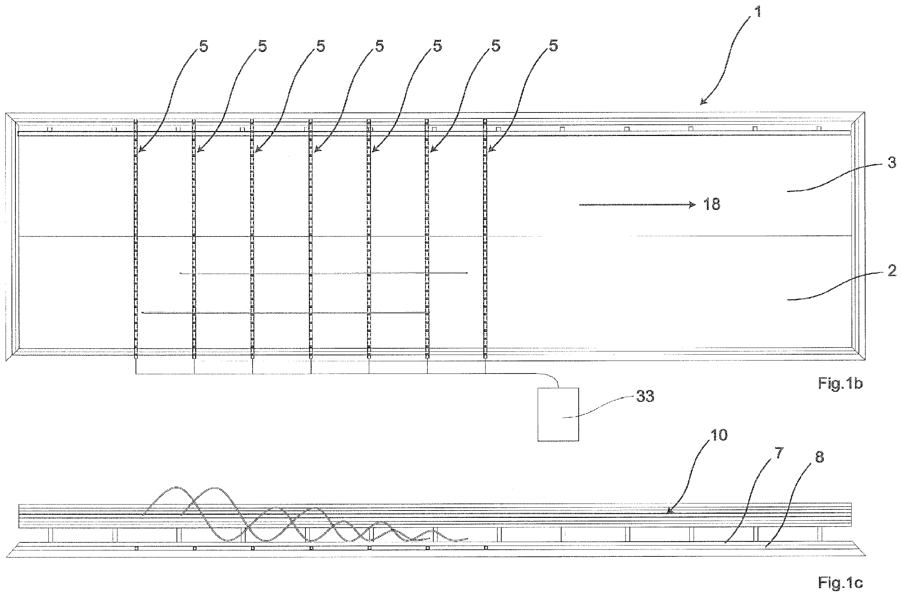

While travelling over the lane 2, a vehicle will spring up and/or spring in depending on the vehicle dynamics. This is shown schematically in Figure 1 by a double line. The force exerted by the vehicle wheels on the lane 2 will vary. By combining the measurement values of the sensors 15 of the main sensor device and of the auxiliary sensor devices, the axle load and/or the total weight of the vehicle can be accurately determined.

The signals from the optical sensors 15 of the sensor devices 5 can bridge long distances, for example by using existing optical fibre infrastructure. The central read-out unit 33 can be connected to a large number of sensor devices 5 which are located at distances of 100 or 500 m from one another. This is applicable, for example, in a traffic interchange of highways. It is even possible to connect sensor devices 5 which are located, for example, 20 km apart from one another to the same central read-out unit 33.

Obviously, the invention is not limited to the exemplary embodiment described above. The person skilled in the art can apply various adaptations which lie within the scope of the invention. The road surface may, for example, also be a bicycle path. It is also possible for the support to comprise an elongated base wall, wherein the measuring zones are each formed by separate measuring elements which are disposed on the base wall in the longitudinal direction of the support at a distance from one another. Furthermore, the or each support may comprise one or more sensors for measuring temperature. As a result, the asphalt rigidity can be corrected for the temperature in order to increase the accuracy of the measurement results. It should also be noted that the carriageway of the road surface may relate to traffic in one direction or two opposing directions, wherein a single-lane road or multi-lane road is disposed in each direction. It should further be noted that the system according to claim 1 and/or the method according to claim 14 can be designed according to one or more of the features described above, possibly in combination with one or more of the features of the subclaims.

The invention also relates to a system for determining the axle load and/or total weight of a vehicle, comprising a road surface with at least one carriageway, and at least one sensor device which comprises an elongated support, said support being disposed transversely in relation to the carriageway under the carriageway, wherein the support is provided with a plurality of measuring zones, which are each provided with at least one sensor for measuring deformation of this measuring zone in response to a force exerted substantially perpendicular to the carriageway, and wherein the measuring zones are separated from one another in the longitudinal direction of the support by intermediate zones, and wherein the axial rigidity of the measuring zones in a direction perpendicular to the carriageway is greater than the axial rigidity of the intermediate zones in a direction perpendicular to the carriageway. This system can be designed according to one or more of the features described above and/or according to one or more of the features of the claims.

The invention further relates to a method for the dynamic determination of axle load and/or total weight of a vehicle travelling over a carriageway of a road surface comprising:
- the provision of at least one sensor device which comprises an elongated support, wherein the support is provided with a plurality of measuring zones which are each provided with at least one sensor for measuring deformation of this measuring zone, and wherein the measuring zones are separated from one another in the longitudinal direction of the support by intermediate zones, and wherein the axial rigidity of the measuring zones in a direction perpendicular to the carriageway is greater than the axial rigidity of the intermediate zones in a direction perpendicular to the carriageway,
- the disposition of the support transversely in relation to the carriageway under the road surface,
- the exertion of a force exerted substantially perpendicular to the road surface by at least one vehicle wheel,
- the measurement of deformation of each measuring zone in response to the force exerted substantially perpendicular to the carriageway with the sensor of this measuring zone substantially independently from the measurement of deformation of the other measuring zones. This method can be carried out according to one or more of the features described above and/or according to one or more of the features of the claims.

## Claims

1. System, in particular for determining the location of a force exerted by a vehicle wheel and/or axle load and/or total weight of a vehicle,
comprising a road surface (1) with a carriageway (2, 3), at least one sensor device (5), and also a read-out unit (33),
said sensor device (5) comprising optical sensors and an elongated support (6) which is disposed under the carriageway (2, 3) transversely in relation to the carriageway (2, 3), and said support (6) being provided with a plurality of intermediate zones and a plurality of measuring zones (12) which are separated from one another in the longitudinal direction of the support (6) by the intermediate zones (14) so that the elongated support is mechanically segmented in its longitudinal direction,
wherein the axial rigidity of the measuring zones (12) in a direction perpendicular to the carriageway (2, 3) is greater than the axial rigidity of the intermediate zones (14) in a direction perpendicular to the carriageway (2, 3),
wherein each measuring zone (12) is provided with a said optical sensor (15) to measure the local deformation of this measuring zone (12) in response to a force exerted substantially perpendicular to the carriageway (2, 3), and
wherein the optical sensors (15) are designed as Fibre Bragg Gratings, the optical sensors (15) of all measuring zones being disposed in a single optical fibre and connected to the read-out unit (33) in such a way that each said optical sensor (15) can be read out separately by the read-out unit (33).

2. System according to claim 1, wherein the sensors (15) of the measuring zones (12) extend in a direction substantially perpendicular to the carriageway (2, 3).

3. System according to claim 1 or 2, wherein the support (6) is provided with a profile form with an upper flange (23) and a vertical body part (25), wherein the upper flange (23) is disposed substantially parallel to the carriageway (2, 3) and the vertical body part (25) is disposed substantially perpendicular in relation to the carriageway (2, 3), and wherein the vertical body part (25) is provided with the measuring zones (12) and the intermediate zones (14).

4. System according to claim 3, wherein the profile form is provided with a lower flange (24), which is disposed substantially parallel to the carriageway (2, 3) to the vertical body part (25) so that the profile form forms an I-bar.

5. System according to claim 3 or 4, wherein the upper flange (23) has a width F which extends perpendicular in relation to the longitudinal direction of the support (6), and wherein the vertical part (25), at the position of the measuring zones (12), has a thickness d which extends perpendicular in relation to the longitudinal direction of the support (6), and wherein the ratio F/d is between 1-10.

6. System according to one of claims 3-5, wherein the measuring zones (12), which are separated from one another in the longitudinal direction of the support (6) by the intermediate zones (14), are located at a distance from one another which is less than 300 mm, 200 mm or 100 mm, and/or wherein the measuring zones (12), which are bounded in the longitudinal direction of the support (6) by the intermediate zones (14), each have a length which is less than 20 mm, 10 mm or 5 mm, and/or wherein the support (6), in the longitudinal direction thereof, has a length which is between 1-5 metres.

7. System according to one of the preceding claims, wherein at least one intermediate zone (14) is provided with two pivot parts (30, 31), which are pivotable about a pivot axis (32) which extends substantially parallel to the carriageway (2, 3) and perpendicular in relation to the longitudinal direction of the support (6).

8. System according to one of the preceding claims, wherein the longitudinal direction of the support (6) extends obliquely in relation to the lateral direction of the carriageway (2, 3).

9. System according to one of the preceding claims, wherein the sensors (15) of the measuring zones (12) are disposed on a surface of the support (6) without being clamped between parts of the support (6).

10. System according to one of the preceding claims, wherein the axial rigidity of each measuring zone (12), in a direction perpendicular to the carriageway (2, 3), is greater than the rigidity of the sensor of this measuring zone (12).

11. System according to one of the preceding claims, wherein the carriageway of the road surface (1) comprises at least twolanes (2, 3), and wherein the support (6) extends under the two lanes (2, 3) of the carriageway.

12. System according to one of the preceding claims, wherein a plurality of sensor devices (5) are provided, which are each designed according to one of the preceding claims, and/or wherein the supports (6) of at least two of the sensor devices (5) are disposed transversely in relation to the carriageway (2, 3) under the carriageway (2, 3) and in the direction of travel (18) of this carriageway (2, 3) at a distance from one another, and/or wherein the supports (6) of at least two of the sensor devices (5) are disposed transversely in relation to the carriageway (2, 3) under the carriageway (2, 3) and under one another, and/or wherein the carriageway of the road surface (1) comprises at least two lanes (2, 3), and wherein the supports (6) of at least two of the sensor devices (5) are disposed transversely in relation to the first lane (2) under the first lane (2) and transversely in relation to the second lane (3) under the second lane (3), respectively, and wherein the support (6) of the sensor device (5) extends under the first lane (2) substantially in the extension of the support (6) of the sensor device (5) under the second lane (3).

13. System according to claim 12, wherein at least two of the sensor devices (5) are disposed at a distance from one another of at least 100 metres or 500 metres or 1 km or 5 km or 10 km, and wherein the sensors (15) of these sensor devices (5) are connected by means of optical fibres to a central read-out unit (33).

14. Method, in particular for determining the location of a force exerted by a vehicle wheel and/or axle load and/or total weight of a vehicle travelling over a carriageway (2, 3) of a road surface (1),
the method using a sensor device (5) comprising optical sensors and an elongated support (6) which is disposed under the carriage way (2,3) transversely in relation to the carriage way (2,3), the support (6) being provided with a plurality of intermediate zones (14) and a plurality of measuring zones (12) which are separated from one another in the longitudinal direction of the support (6) by the intermediate zones (14) so that the elongated support is mechanically segmented in its longitudinal direction,
the method comprising:
- the exertion of a force exerted substantially perpendicular to the carriageway (2, 3) by at least one vehicle wheel of the vehicle travelling over the carriageway (2, 3) of the road surface (1),
- the measurement of deformation of at least one measuring zone (12) of the plurality of measuring zones (12) of the elongated support (6) of at least one said sensor device (5) in response to the force exerted substantially perpendicular to the carriageway (2, 3), wherein the axial rigidity of the measuring zones (12) in a direction perpendicular to the carriageway (2, 3) is greater than the axial rigidity of the intermediate zones (14) in a direction perpendicular to the carriageway (2, 3), wherein each measuring zone (12) is provided with a said optical sensor (15) to measure local deformation of this measuring zone (12) in response to a force exerted substantially perpendicular to the carriageway (2, 3), wherein the optical sensors are designed as Fibre Bragg Gratings, the optical sensors (15) of all measuring zones being disposed in a single optical fibre and connected to a read-out unit (33) in such a way that each said optical sensor (15) can be read out separately by the read-out unit (33), and wherein the measurement of deformation of the at least one measuring zone (12) in response to the force exerted substantially perpendicular to the carriageway (2, 3) is carried out with the optical sensor (15) of this measuring zone (12) by the reading out thereof by the read-out unit (33).

15. Method according to claim 14, wherein the sensor device (5) forms a main sensor device, and wherein a plurality of auxiliary sensor devices are provided which each comprise an elongated support (6) which is provided with a plurality of measuring zones (12) which are each provided with at least one sensor (15) to measure deformation of this measuring zone (12), and each sensor (15) is connected to the read-out unit (33) in such a way that each sensor (15) can be read out separately by the read-out unit (33), and wherein the measuring zones (12) are separated from one another in the longitudinal direction of the support (6) by intermediate zones (14), and wherein the axial rigidity of the measuring zones (12) in a direction perpendicular to the carriageway (2, 3) is greater than the axial rigidity of the intermediate zones (14) in a direction perpendicular to the carriageway (2, 3), and wherein the supports (6) of the auxiliary sensor devices are disposed transversely in relation to the carriageway (2, 3) under the carriageway (2, 3) and in the direction of travel (18) of the carriageway (2, 3) at a distance from the support (6) of the main sensor device, and wherein the sensors (15) of the main sensor device and the auxiliary sensor devices are read out by the read-out unit (33) to provide measurement values, and wherein a change in the force exerted substantially perpendicular to the carriageway (2, 3) in the direction of travel (18) of the carriageway (2, 3) is determined from these measurement values, and wherein the axle load and/or the total weight is calculated depending on this change.

## Patentansprüche

1. System, insbesondere zur Bestimmung des Ortes einer Kraft, die von einem Fahrzeugrad und/oder einer Achslast und/oder einem Gesamtgewicht eines Fahrzeugs ausgeübt wird,
umfassend eine Straßenoberfläche (1) mit einer Fahrbahn (2, 3), mindestens eine Sensorvorrichtung (5), und auch eine Ausleseeinheit (33),
wobei die Sensorvorrichtung (5) optische Sensoren und einen länglichen Träger (6) umfasst, der unter der Fahrbahn (2, 3) quer zu der Fahrbahn (2, 3) angeordnet ist, und wobei der Träger (6) mit mehreren Zwischenzonen und mehreren Messzonen (12) versehen ist, die in Längsrichtung des Trägers (6) durch die Zwischenzonen (14) voneinander getrennt sind, so dass der längliche Träger in seiner Längsrichtung mechanisch segmentiert ist,
wobei die axiale Steifigkeit der Messzonen (12) in einer Richtung senkrecht zu der Fahrbahn (2, 3) größer ist als die axiale Steifigkeit der Zwischenzonen (14) in einer Richtung senkrecht zu der Fahrbahn (2, 3), wobei jede Messzone (12) mit einem solchen optischen Sensor (15) versehen ist, um die lokale Verformung dieser Messzone (12) in Reaktion auf eine Kraft, die im Wesentlichen senkrecht zu der Fahrbahn (2, 3) ausgeübt wird, zu messen, und
wobei die optischen Sensoren (15) als Fibre Bragg Gratings ausgebildet sind, die optischen Sensoren (15) aller Messzonen in einer einzigen optischen Faser angeordnet sind und mit der Ausleseeinheit (33) derart verbunden sind, dass jeder dieser optischen Sensoren (15) von der Ausleseeinheit (33) separat ausgelesen werden kann.

2. System nach Anspruch 1, wobei sich die Sensoren (15) der Messzonen (12) in einer Richtung erstrecken, die im Wesentlichen senkrecht zu der Fahrbahn (2, 3) ist.

3. System nach Anspruch 1 oder 2, wobei der Träger (6) mit einer Profilform mit einem oberen Flansch (23) und einem vertikalen Körperabschnitt (25) aufweist, wobei der obere Flansch (23) im Wesentlichen parallel zu der Fahrbahn (2, 3) und der vertikale Körperabschnitt (25) im Wesentlichen senkrecht zu der Fahrbahn (2, 3) angeordnet ist, und wobei der vertikale Körperabschnitt (25) mit den Messzonen (12) und den Zwischenzonen (14) versehen ist.

4. System nach Anspruch 3, wobei die Profilform mit einem unteren Flansch (24) versehen ist, der im Wesentlichen parallel zu der Fahrbahn (2, 3) zu dem vertikalen Körperabschnitt (25) angeordnet ist, so dass die Profilform einen I-Balken bildet.

5. System nach Anspruch 3 oder 4, wobei der obere Flansch (23) eine Breite F aufweist, die sich senkrecht zur Längsrichtung des Trägers (6) erstreckt, und wobei der vertikale Abschnitt (25) an der Position der Messzonen (12) eine Dicke d aufweist, die sich senkrecht zur Längsrichtung des Trägers (6) erstreckt, und wobei das Verhältnis F/d zwischen 1 und 10 liegt.

6. System nach einem der Ansprüche 3bis 5, wobei die Messzonen (12), die in Längsrichtung des Trägers (6) durch die Zwischenzonen (14) voneinander getrennt sind, sich in einem Abstand von weniger als 300 mm, 200 mm oder 100 mm zueinander befinden, und/oder wobei die Messzonen (12), die in Längsrichtung des Trägers (6) durch die Zwischenzonen (14) begrenzt sind, jeweils eine Länge aufweisen, die weniger als 20 mm, 10 mm oder 5 mm beträgt, und/oder wobei der Träger (6) in seiner Längsrichtung eine Länge hat, die zwischen 1 bis 5 Metern liegt.

7. System nach einem der vorhergehenden Ansprüche, wobei mindestens eine Zwischenzone (14) mit zwei Schwenkabschnitten (30, 31) versehen ist, die um eine Schwenkachse (32) schwenkbar sind, die sich im Wesentlichen parallel zu der Fahrbahn (2, 3) und senkrecht zur Längsrichtung des Trägers (6) erstreckt.

8. System nach einem der vorhergehenden Ansprüche, wobei sich die Längsrichtung des Trägers (6) schräg in Bezug auf die laterale Richtung der Fahrbahn (2, 3) erstreckt.

9. System nach einem der vorhergehenden Ansprüche, wobei die Sensoren (15) der Messzonen (12) auf einer Oberfläche des Trägers (6) angeordnet sind, ohne zwischen Abschnitten des Trägers (6) eingeklemmt zu sein.

10. System nach einem der vorhergehenden Ansprüche, wobei die axiale Steifigkeit jeder Messzone (12) in einer Richtung senkrecht zu der Fahrbahn (2, 3) größer ist als die Steifigkeit des Sensors dieser Messzone (12).

11. System nach einem der vorhergehenden Ansprüche, wobei die Fahrbahn der Straßenoberfläche (1) mindestens zwei Fahrspuren (2, 3) umfasst, und wobei sich der Träger (6) unter den beiden Fahrspuren (2, 3) der Fahrbahn erstreckt.

12. System nach einem der vorhergehenden Ansprüche, wobei mehrere Sensorvorrichtungen (5) vorgesehen sind, die jeweils gemäß einem der vorhergehenden Ansprüche ausgebildet sind, und/oder wobei die Träger (6) von mindestens zwei der Sensorvorrichtungen (5) quer zu der Fahrbahn (2, 3) unter der Fahrbahn (2, 3) und in Fahrtrichtung (18) dieser Fahrbahn (2, 3) mit Abstand zueinander angeordnet sind, und/oder wobei die Träger (6) von mindestens zwei der Sensorvorrichtungen (5) quer zu der Fahrbahn (2, 3) unter der Fahrbahn (2, 3) und untereinander angeordnet sind, und/oder wobei die Fahrbahn der Straßenoberfläche (1) mindestens zwei Fahrspuren (2, 3) aufweist, und wobei die Träger (6) von mindestens zwei der Sensorvorrichtungen (5) quer zur ersten Fahrspur (2) unter der ersten Fahrspur (2) bzw. quer zur zweiten Fahrspur (3) unter der zweiten Fahrspur (3) angeordnet sind, und wobei sich der Träger (6) der Sensorvorrichtung (5) unter der ersten Fahrspur (2) im Wesentlichen in der Erstreckungsrichtung des Trägers (6) der Sensorvorrichtung (5) unter der zweiten Fahrspur (3) erstreckt.

13. System nach Anspruch 12, wobei mindestens zwei der Sensorvorrichtungen (5) in einem Abstand voneinander von mindestens 100 m oder 500 m oder 1 km oder 5 km oder 10 km voneinander angeordnet sind, und wobei die Sensoren (15) dieser Sensorvorrichtungen (5) durch Lichtwellenleiter mit einer zentralen Ausleseeinheit (33) verbunden sind.

14. Verfahren, insbesondere zur Bestimmung des Ortes einer Kraft, die von einem Fahrzeugrad und/oder einer Achslast, und/oder einem Gesamtgewicht eines Fahrzeugs, das über eine Fahrbahn (2, 3) einer Straßenoberfläche (1) fährt, ausgeübt wird,
wobei das Verfahren eine Sensorvorrichtung (5) mit optischen Sensoren und einem länglichen Träger (6), der unter der Fahrbahn (2,3) quer zu der Fahrbahn (2,3) angeordnet ist, verwendet, wobei der Träger (6) mit einer Vielzahl von Zwischenzonen (14) und einer Vielzahl von Messzonen (12) versehen ist, die in Längsrichtung des Trägers (6) durch die Zwischenzonen (14) derart voneinander getrennt sind, dass der längliche Träger in seiner Längsrichtung mechanisch segmentiert ist,
wobei das Verfahren umfasst:
- die Ausübung einer Kraft, die im Wesentlichen senkrecht zu der Fahrbahn (2, 3) durch mindestens ein Fahrzeugrad des über die Fahrbahn (2, 3) der Straßenoberfläche (1) fahrenden Fahrzeugs ausgeübt wird,
- die Messung der Verformung mindestens einer Messzone (12) der mehreren Messzonen (12) des länglichen Trägers (6) mindestens einer der Sensorvorrichtungen (5) in Reaktion auf die im Wesentlichen senkrecht zu der Fahrbahn (2, 3) ausgeübte Kraft,
wobei die axiale Steifigkeit der Messzonen (12) in einer Richtung senkrecht zu der Fahrbahn (2, 3) größer ist als die axiale Steifigkeit der Zwischenzonen (14) in einer Richtung senkrecht zu der Fahrbahn (2, 3), wobei jede Messzone (12) mit einem solchen optischen Sensor (15) versehen ist, um die lokale Verformung dieser Messzone (12) in Reaktion auf eine im Wesentlichen senkrecht zu der Fahrbahn (2, 3) ausgeübte Kraft zu messen, wobei die optischen Sensoren als Fibre Bragg Gratings ausgebildet sind, wobei die optischen Sensoren (15) aller Messzonen in einer einzigen optischen Faser angeordnet sind und derart mit einer Ausleseeinheit (33) verbunden sind, dass jeder der optischen Sensoren (15) separat von der Ausleseeinheit (33) separat ausgelesen werden kann, und wobei die Messung der Verformung der mindestens einen Messzone (12) in Reaktion auf die im Wesentlichen senkrecht zu der Fahrbahn (2, 3) ausgeübten Kraft mit dem optischen Sensor (15) dieser Messzone (12) durch Auslesen durch die Ausleseeinheit (33) ausgeführt wird.

15. Verfahren nach Anspruch 14, wobei die Sensorvorrichtung (5) eine Hauptsensorvorrichtung bildet, und wobei mehrere Hilfssensorvorrichtungen vorgesehen sind, die jeweils einen länglichen Träger (6) umfassen, der mit mehreren Messzonen (12) versehen ist, die jeweils mit mindestens einem Sensor (15) zum Messen der Verformung dieser Messzone (12) versehen sind, und jeder Sensor (15) derart mit der Ausleseeinheit (33) derart verbunden ist, dass jeder Sensor (15) durch die Ausleseeinheit (33) separat ausgelesen werden kann, und wobei die Messzonen (12) in Längsrichtung des Trägers (6) durch Zwischenzonen (14) voneinander getrennt sind, und wobei die axiale Steifigkeit der Messzonen (12) in einer Richtung senkrecht zu der Fahrbahn (2, 3) größer ist als die axiale Steifigkeit der Zwischenzonen (14) in einer Richtung senkrecht zu der Fahrbahn (2, 3), und wobei die Träger (6) der Hilfssensorvorrichtungen quer zu der Fahrbahn (2, 3) unter der Fahrbahn (2, 3) und in Fahrtrichtung (18) der Fahrbahn (2, 3) in einem Abstand von dem Träger (6) der Hauptsensorvorrichtung angeordnet sind, und wobei die Sensoren (15) der Hauptsensorvorrichtung und der Hilfssensorvorrichtungen von der Ausleseeinheit (33) ausgelesen werden, um Messwerten bereitzustellen, und wobei eine Änderung der Kraft, die im Wesentlichen senkrecht zu der Fahrbahn (2, 3) in Fahrtrichtung (18) der Fahrbahn (2, 3) ausgeübt wird, aus diesen Messwerten bestimmt wird, und wobei in Abhängigkeit von dieser Änderung die Achslast und/oder das Gesamtgewicht berechnet werden.

## Revendications

1. Système, en particulier pour déterminer l'emplacement d'une force appliquée par une charge de roue et/ou d'essieu de véhicule et/ou par un poids total d'un véhicule, comprenant une surface de route (1) avec une chaussée (2, 3), au moins un dispositif de capteur (5), ainsi qu'une unité de lecture (33),
ledit dispositif de capteur (5) comprenant des capteurs optiques et un support allongé (6) qui est disposé sous la chaussée (2, 3) transversalement à la chaussée (2, 3), et ledit support (6) étant pourvu d'une pluralité de zones intermédiaires et d'une pluralité de zones de mesure (12) qui sont séparées les unes des autres dans la direction longitudinale du support (6) par les zones intermédiaires (14) de sorte que le support allongé est segmenté mécaniquement dans sa direction longitudinale,
dans lequel la rigidité axiale des zones de mesure (12) dans une direction perpendiculaire à la chaussée (2, 3) est supérieure à la rigidité axiale des zones intermédiaires (14) dans une direction perpendiculaire à la chaussée (2, 3),
dans lequel chaque zone de mesure (12) est pourvue d'un dit capteur optique (15) pour mesurer la déformation locale de cette zone de mesure (12) en réponse à une force appliquée sensiblement perpendiculairement à la chaussée (2, 3), et
dans lequel les capteurs optiques (15) sont conçus comme des fibres à réseau de Bragg, les capteurs optiques (15) de toutes les zones de mesure étant disposés dans une seule fibre optique et connectés à l'unité de lecture (33) de telle sorte que chacun desdits capteurs (15) puisse être lu séparément par l'unité de lecture (33).

2. Système selon la revendication 1, dans lequel les capteurs (15) des zones de mesure (12) s'étendent dans une direction sensiblement perpendiculaire à la chaussée (2, 3).

3. Système selon la revendication 1 ou 2, dans lequel le support (6) est pourvu d'une forme profilée avec une bride supérieure (23) et une partie de corps verticale (25), dans lequel la bride supérieure (23) est disposée sensiblement parallèle à la chaussée (2, 3) et la partie de corps verticale (25) est disposée sensiblement perpendiculaire à la chaussée (2, 3), et dans lequel la partie de corps verticale (25) est pourvue des zones de mesure (12) et des zones intermédiaires (14).

4. Système selon la revendication 3, dans lequel la forme profilée est pourvue d'une bride inférieure (24), qui est disposée sensiblement parallèle à la chaussée (2, 3) au niveau de la partie de corps verticale (25) de sorte que la forme profilée forme une barre en I.

5. Système selon la revendication 3 ou 4, dans lequel la bride supérieure (23) a une largeur F qui s'étend perpendiculairement à la direction longitudinale du support (6), et dans lequel la partie verticale (25), au niveau de la position des zones de mesure (12), a une épaisseur d qui s'étend perpendiculairement à la direction longitudinale du support (6), et dans lequel le rapport F/d est compris entre 1 et 10.

6. Système selon l'une des revendications 3 à 5, dans lequel les zones de mesure (12), qui sont séparées les unes des autres dans la direction longitudinale du support (6) par les zones intermédiaires (14), sont situées à une distance les unes des autres qui est inférieure à 300 mm, 200 mm ou 100 mm et/ou dans lequel les zones de mesure (12), qui sont délimitées dans la direction longitudinale du support (6) par les zones intermédiaires (14), ont chacune une longueur qui est inférieure à 20 mm, 10 mm ou 5 mm, et/ou dans lequel le support (6), dans sa direction longitudinale, a une longueur qui est comprise entre 1 et 5 mètres.

7. Système selon l'une des revendications précédentes, dans lequel au moins une zone intermédiaire (14) est pourvue de deux parties pivotantes (30, 31), qui peuvent pivoter autour d'un axe de pivot (32) qui s'étend sensiblement parallèlement à la chaussée (2, 3) et perpendiculairement à la direction longitudinale du support (6).

8. Système selon l'une des revendications précédentes, dans lequel la direction longitudinale du support (6) s'étend obliquement par rapport à la direction latérale de la chaussée (2, 3).

9. Système selon l'une des revendications précédentes, dans lequel les capteurs (15) des zones de mesure (12) sont disposés sur une surface du support (6) sans être pincés entre des parties du support (6).

10. Système selon l'une des revendications précédentes, dans lequel la rigidité axiale de chaque zone de mesure (12), dans une direction perpendiculaire à la chaussée (2, 3), est supérieure à la rigidité du capteur de cette zone de mesure (12) .

11. Système selon l'une des revendications précédentes, dans lequel la chaussée de la surface de route (1) comprend au moins deux voies (2, 3), et dans lequel le support (6) s'étend sous les deux voies (2, 3) de la chaussée.

12. Système selon l'une des revendications précédentes, dans lequel une pluralité de dispositifs de capteur (5) sont prévus, chacun étant conçu selon l'une des revendications précédentes, et/ou dans lequel les supports (6) d'au moins deux des dispositifs de capteur (5) sont disposés transversalement à la chaussée (2, 3) sous la chaussée (2, 3) et dans le sens de la marche (18) de cette chaussée (2, 3) à une distance l'un de l'autre, et/ou dans lequel les supports (6) d'au moins deux des dispositifs de capteur (5) sont disposés transversalement à la chaussée (2, 3) sous la chaussée (2, 3) et l'un sous l'autre, et/ou dans lequel la chaussée de la surface de route (1) comprend au moins deux voies (2, 3), et dans lequel les supports (6) d'au moins deux des dispositifs de capteur (5) sont disposés transversalement à la première voie (2) sous la première voie (2) et transversalement à la deuxième voie (3) sous la deuxième voie (3), respectivement, et dans lequel le support (6) du dispositif de capteur (5) s'étend sous la première voie (2) sensiblement dans le prolongement du support (6) du dispositif de capteur (5) sous la deuxième voie (3).

13. Système selon la revendication 12, dans lequel au moins deux des dispositifs de capteur (5) sont disposés à une distance l'un de l'autre d'au moins 100 mètres ou 500 mètres ou 1 km ou 5 km ou 10 km, et dans lequel les capteurs (15) de ces dispositifs de capteur (5) sont reliés au moyen de fibres optiques à une unité centrale de lecture (33).

14. Procédé, en particulier pour déterminer l'emplacement d'une force appliquée par une charge de roue et/ou d'essieu de véhicule et/ou de poids total d'un véhicule circulant sur une chaussée (2, 3) d'une surface de route (1),
le procédé utilisant un dispositif de capteur (5) comprenant des capteurs optiques et un support allongé (6) qui est disposé sous la chaussée (2, 3) transversalement à la chaussée (2, 3), ledit support (6) étant pourvu d'une pluralité de zones intermédiaires (14) et d'une pluralité de zones de mesure (12) qui sont séparées les unes des autres dans la direction longitudinale du support (6) par les zones intermédiaires (14) de sorte que le support allongé est segmenté mécaniquement dans sa direction longitudinale,
le procédé comprenant:
- l'application d'une force appliquée sensiblement perpendiculairement à la chaussée (2, 3) par au moins une roue de véhicule du véhicule circulant sur la chaussée (2, 3) de la surface de route (1),
- la mesure de déformation d'au moins un zone de mesure (12) de la pluralité de zones de mesure (12) du support allongé (6) d'au moins un dudit dispositif de capteur (5) en réponse à la force appliquée sensiblement perpendiculairement à la chaussée (2, 3), dans lequel la rigidité axiale des zones de mesure (12) dans une direction perpendiculaire à la chaussée (2, 3) est supérieure à la rigidité axiale des zones intermédiaires (14) dans une direction perpendiculaire à la chaussée (2, 3), dans lequel chaque zone de mesure (12) est pourvue d'un dit capteur optique (15) pour mesurer une déformation locale de cette zone de mesure (12) en réponse à une force appliquée sensiblement perpendiculairement à la chaussée (2, 3), dans lequel les capteurs optiques sont conçus comme des fibres à réseau de Bragg, les capteurs optiques (15) de toutes les zones de mesure étant disposés dans une seule fibre optique et connectés à une unité de lecture (33) de telle sorte que chaque dit capteur optique (15) puisse être lu séparément par l'unité de lecture (33), et dans lequel la mesure de déformation de la au moins une zone de mesure (12) en réponse à la force appliquée sensiblement perpendiculairement à la chaussée (2, 3) est réalisée avec le capteur optique (15) de cette zone de mesure (12) par la lecture de celui-ci par l'unité de lecture (33).

15. Procédé selon la revendication 14, dans lequel le dispositif de capteur (5) forme un dispositif de capteur principal, et dans lequel une pluralité de dispositifs de capteur auxiliaires sont prévus, qui comprennent chacun un support allongé (6) qui est pourvu d'une pluralité de zones de mesure (12) qui sont chacune pourvues d'au moins un capteur (15) pour mesurer une déformation de cette zone de mesure (12), et chaque capteur (15) est connecté à l'unité de lecture (33) de telle sorte que chaque capteur (15) peut être lu séparément par l'unité de lecture (33), et dans lequel les zones de mesure (12) sont séparées les unes des autres dans la direction longitudinale du support (6) par des zones intermédiaires (14), et dans lequel la rigidité axiale des zones de mesure (12) dans une direction perpendiculaire à la chaussée (2, 3) est supérieure à la rigidité axiale des zones intermédiaires (14) dans une direction perpendiculaire à la chaussée (2, 3), et dans lequel les supports (6) des dispositifs de capteurs auxiliaires sont disposés transversalement à la chaussée (2, 3) sous la chaussée (2, 3) et dans le sens de la marche (18) de la chaussée (2, 3) à une distance du support (6) du dispositif de capteur principal, et dans lequel les capteurs (15) du dispositif de capteur principal et des dispositifs de capteur auxiliaires sont lus par l'unité de lecture (33) pour fournir des valeurs de mesure, et dans lequel un changement de la force appliquée sensiblement perpendiculairement à la chaussée (2, 3) dans le sens de la marche (18) de la chaussée (2, 3) est déterminé à partir de ces valeurs de mesure, et dans lequel la charge par essieu et/ou le poids total est calculée en fonction de ce changement.
